# EUROPEAN PATENT APPLICATION

(11) **EP 2 400 476 A1**
(43) Date of publication of application: **28.12.2011**
(21) Application number: 10305692.5
(22) Date of filing: 28.06.2010
(51) Int. Cl.: G09C 5/00

(54) **Method and device for 3D object protection by permutation of its points**

(71) Applicant: Thomson Licensing, 92130 Issy-les-Moulineaux (FR)
(72) Inventor: LELIEVRE, Sylvain, 92443, Issy-Les-Moulineaux (FR); ELUARD, Marc, 92443, Issy-Les-Moulineaux (FR); MAETZ, Yves, 92443, Issy-Les-Moulineaux (FR)
(74) Representative: Ruellan-Lemonnier, Brigitte

(57) **Abstract**

A 3D object (120; 410) is protected by a first device (110) that receives (210) the 3D object (120; 410), permutes (220) the position of at least some of the points of the 3D object (120; 410) to obtain a protected 3D object (130; 420), and outputs (230) the protected 3D object (130; 420). The protected 3D object (130; 420) is unprotected by a second device (140) by receiving (240) the protected 3D object (130; 420), permuting (250) the position of at least some the points of the protected 3D object (130; 420) to obtain an unprotected 3D object (150; 410), and outputting (260) the unprotected 3D object (150; 410). Also provided are the first device (110), the second device (140) and computer readable storage media (160, 170).

## Description

### TECHNICAL FIELD

The present invention relates generally to 3-D models and in particular to the protection of graphical objects of such models.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

The use of three-dimensional (3D) objects has been increasing in the last years, particularly with the emergence of metaverses. There are multiple usages for 3D objects: socializing worlds, games, mirroring worlds, simulation tools, but also 3D User interfaces, animation movies and visual effects for television. Generally, 3D virtual objects represent real money value. In socializing worlds and games, players are selling virtual objects or avatars to other players for real money. Building an experienced character within an online game is a very lengthy process that can require hundreds of hours behind the keyboard. The 3D model of a real-world object from a simulation tool allows manufacturing the real (counterfeit) object and selling it. Leaking the 3D model for a scene of the next blockbuster from Hollywood studios may result in bad press for the studios. As can be seen, in many cases, 3D objects are assets of great value for their owner.

Strategies for content protection comprise confidentiality protection - intended to make it impossible for unauthorized users to access the content, e.g. by encryption - and watermarking - intended to make it possible to track a user who has disseminated the content without authorization to do so.

Basic methods of 3D content protection focus on the entire data, i.e. all the data is either encrypted or watermarked (or both), although these methods are somewhat crude.

More subtle ways of protecting 3D content is to protect one or more of its 3D objects. This is possible as 3D content often is made up of a number of distinct objects positioned in a setting. When each 3D object is coded as a separate entity, it becomes possible to protect each of these separately and it is not necessary to protect all of them.

For example, US 2008/0022408 describes a method of 3D object protection by storing non-encrypted data in one file and encrypted data in a separate file. Any user may access the non-encrypted data, but only authorized users can access the encrypted data; non-authorized users see a basic representation thereof, such as a parallelepiped instead of a car. However, this method was developed to be used with 3D rendering software and is less suited for multimedia content, such as video and film.

US 6678378 describes a solution for protecting a 3D Computer Aided Design (CAD) object by encryption. The solution may encrypt one of the coordinate values of the nodes and the equations for the edges or the contours, by nonlinear or affine transformation, thereby distorting the 3D object or by 'normal' encryption such as RSA.

Problems with this solution is that the calculations may be costly (in particular when using RSA) and that the distortions may not be sufficient to deter a malicious user from using the content nevertheless. In addition, in the case of 'normal' encryption, the 3D object may not be readable at all by a content consuming device - such as a computer or a television - which may be a drawback in some cases.

A digital rights enabled graphics processing system was proposed in 2006 by Shi, W., Lee, H., Yoo, R., and Boldyreva, A: A Digital Rights Enabled Graphics Processing System. In GH '06: Proceedings of the 21st ACM SIGGRAPH/ EUROGRAPHICS symposium on Graphics hardware, ACM, 17-26.]. With this system, the data composing the 3D object (collection of vertices, textures) is encrypted. Their decryption is handled within the GPU, under control of licenses. It is proposed also to use multi resolution meshes to deliver simultaneously a protected and unprotected version of a 3D element. Although the system itself is a real progress towards secure 3D environments, the use of protected scenes with other Virtual Reality Modelling Language (VRML) renderers will lead to interoperability issues.

It will therefore be appreciated that there is a need for a system that enables protection of 3D objects with quick calculations that still enables a content consuming device to read and display the 3D object, albeit in a manner that renders the viewing thereof unsatisfactory. The present invention provides such a system.

### SUMMARY OF INVENTION

In a first aspect, the invention is directed to a method of protecting a graphical object. A device receives the graphical object, permutes the position of at least some of the points defining the graphical object according to a determined permutation order to obtain a protected graphical object, and outputs the protected graphical object.

In a first preferred embodiment, the graphical object is a three-dimensional object.

In a second preferred embodiment the position of all the points are permuted.

In a third preferred embodiment, the positions of the points are permuted using a key-based permutation algorithm.

In a second aspect, the invention is directed to a method of unprotecting a protected graphical object. A device receives the protected graphical object that is protected by a first permutation of the position of at least some of the points defining the graphical object according to a first determined permutation order; permutes the position of the permuted points of the protected graphical object according to a second determined permutation order that reverses the first permutation, to obtain a unprotected graphical object; and outputs the unprotected graphical object.

In a first preferred embodiment, the graphical object is a three-dimensional object. It is advantageous that the points correspond to the vertices of the surfaces composing the graphical object and are expressed in 3D coordinates. It is alternatively advantageous that the points correspond to the mapping of textures on the surfaces composing the graphical object and are expressed in two-dimensional coordinates.

In a second preferred embodiment the position of all the points are permuted.

In a third preferred embodiment, the positions of the points are permuted using a key-based permutation algorithm.

In a fourth preferred embodiment, outputting comprises rendering.

In a third aspect, the invention is directed to a device for protecting a graphical object. The device comprises means for receiving the graphical object; means for permuting the position of at least some of the points defining the graphical object according to a determined permutation order, to obtain a protected graphical object; and means for outputting the protected graphical object.

In a fourth aspect, the invention is directed to a device for unprotecting a protected graphical object. The device comprises means for receiving the protected graphical object that is protected by a first permutation of the position of at least some of the points defining the graphical object according to a first determined permutation order; means for permuting the position of the permuted points of the protected graphical object according to a second determined permutation order that reverses the first permutation, to obtain an unprotected graphical object; and means for outputting the unprotected graphical object.

### BRIEF DESCRIPTION OF DRAWINGS

Preferred features of the present invention will now be described, by way of non-limiting example, with reference to the accompanying drawings, in which
Figure 1 illustrates a system for protecting a 3D object according to a preferred embodiment of the present invention;
Figure 2 illustrates a method for protecting a 3D object according to a preferred embodiment of the present invention; and
Figures 3 and 4 illustrate different aspects of 3D object protection according to a preferred embodiment of the present invention.

### DESCRIPTION OF EMBODIMENTS

In some 3D content formats, such as for example Virtual Reality Modelling Language (VRML) and X3D, a 3D graphical object ("3D object") is represented as a first list (or array) of points and a second list with information on how to link the points together.

A salient inventive idea of the present invention is to protect a 3D object by performing a cryptographic algorithm, preferably a key-based permutation of the position of the points in the first list. The permutation results in a shuffling of the set of points so that the protected 3D object is still understood by any standard 3D model rendering application, but the resulting display becomes weird and hardly usable to a viewer.

Authorized users have the means to reverse the permutation and shuffle the points back to their original positions.

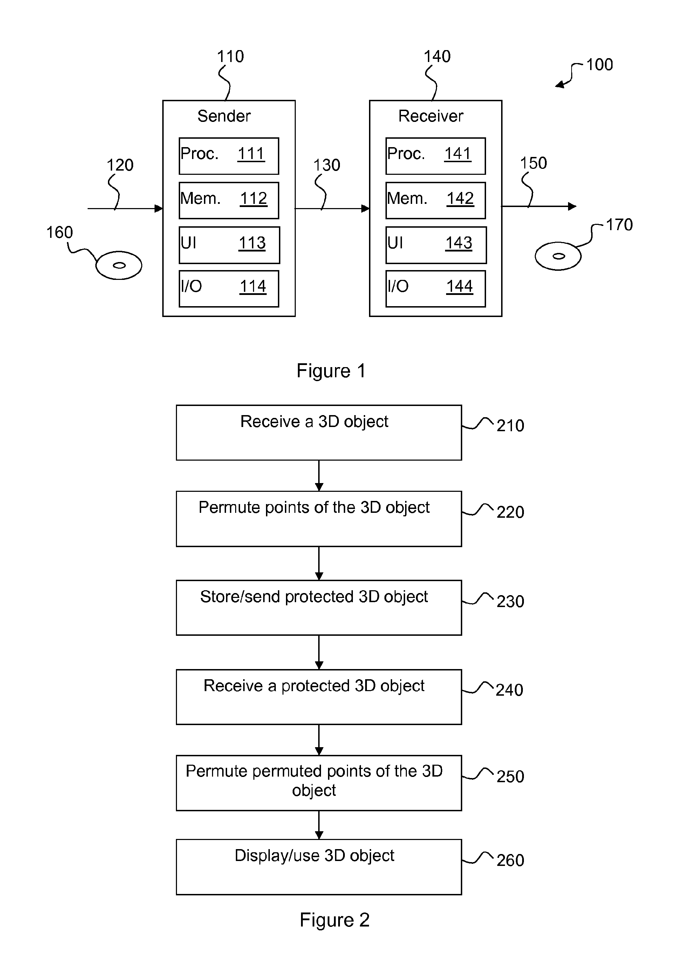

Figure 1 illustrates a system 100 for protecting a 3D object according to a preferred embodiment of the present invention and Figure 2 illustrates a method for protecting a 3D object according to a preferred embodiment of the present invention. As a non-limitative example, the points correspond to the vertices of the surfaces composing the graphical object and are expressed in 3D coordinates, and the second list comprises information on how to link the vertices together to form lines and surfaces. The permutation may be performed on the static part (Coordinate node in VRML syntax) or the animation part (Coordinatelnterpolator node in VRML syntax), or preferably both. In other words, it is the representation of the 3D object that is protected, which makes impossible the correct rendering of the object.

The system 100 comprises a sender 110 and a receiver 140, each comprising at least one processor 111, 141, memory 112, 142, preferably a user interface 113, 143, and at least one input/output unit 114, 144. The sender 110 may for example be a personal computer or a workstation, while the receiver 120 for example may not only be a personal computer or a workstation, but also a television set, a video recorder, a set-top box or the like.

The sender 110 receives 210 a 3D object 120 to be protected, uses a key to permute 220 the points of the 3D object 120 to obtain a protected 3D object 130 that is stored or sent 230 to the receiver 140. The receiver 120 receives 240 the protected 3D object 130, restores 250 the permuted points by permuting them using a key (which may be any secret number), and may then display or otherwise use 260 the unprotected 3D object 150. It should be noted that the initial 3D object 120 and the unprotected 3D object 150 normally are identical.

As a result, an authorized user will not notice anything out of the ordinary since all objects will be displayed correctly, while an unauthorized user will see the overall scene with the protected object or objects rendered in an incorrect way.

A first computable readable storage medium 160 comprises stored instructions that when executed by the processor 111 of the sender 110 protects the 3D object as described. A second computable readable storage medium 170 comprises stored instructions that when executed by the processor 141 of the receiver 140 unprotects the 3D object as described.

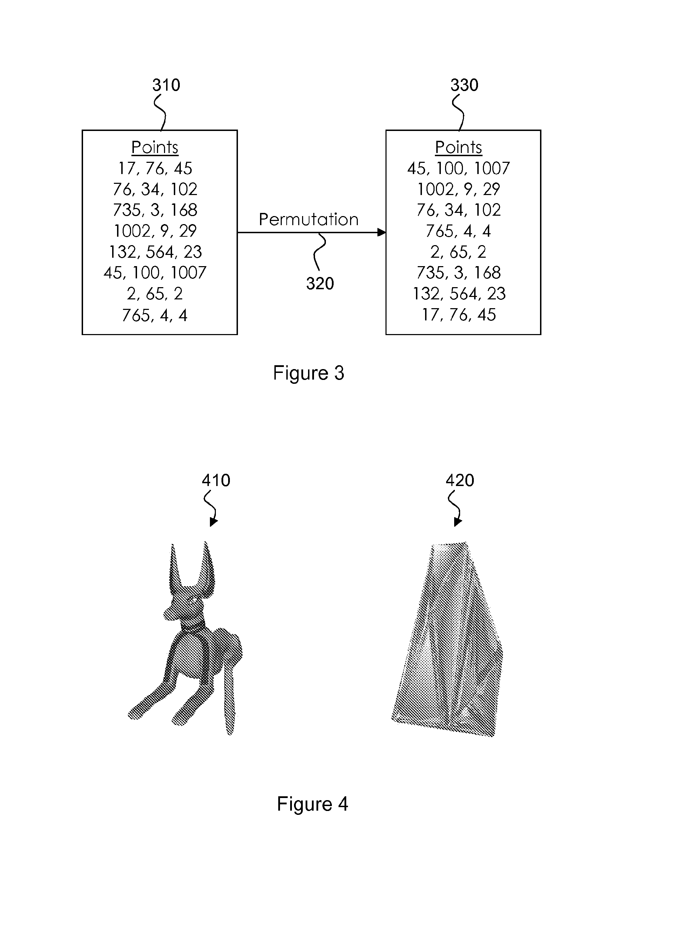

Figures 3 and 4 illustrate different aspects of 3D object protection according to a preferred embodiment of the present invention. Figure 3 shows an unprotected list of points 310 - for example the static part of the object - that after permutation 320 becomes a protected list of points 330. It can be seen that the points do not occupy the same place in the two lists. Figure 4 illustrates the rendering of 3D objects: a rendered unprotected 3D object 410 is shown next to a rendered protected 3D object 420 to enable comparison between them. As can be seen, the rendered protected 3D object 420 is practically completely incomprehensible, as only things like the general size may be deduced.

In an alternative embodiment, the points of the 3D graphical object correspond to the mapping of textures on the surfaces composing the graphical object and are expressed in two-dimensional coordinates.

The permutation used may be virtually any key-based permutation algorithm that permutes the points following a determined permutation order. A basic example of such an algorithm is to move each point in the list at index *i* to the index *i*'. To protect the list, *i*'=(*i*+*k*) *mod N* with k being a secret and N the size of the list. To unprotect the list, *i*'=(*i*-*k*) *mod N.* A further example of permutation algorithm has been described by Donald E. Knuth in "The Art of Computer Programming volume 2: Seminumerical algorithms", pp. 138-140.

It should be noted that one or more points may remain unpermuted without noticeably affecting the security, in particular if the ratio number of unpermuted points/number of permuted points remains small.

The skilled person will appreciate that user authorization and key management are out of scope of the present invention.

It may thus be seen that the points are only permuted. A traditional approach would be to encrypt vertex data, which at best would result in having random points spread all over the 3D space and overlapping with the other objects of the complete scene; at worst, it would not at all be possible to render the 3D object. With the approach of the present invention, the protected 3D object stays within the geometrical limits of the original, i.e. unprotected, 3D object. Therefore, when the user is not authorized to unprotect one object, the overall scene is not confused by the display of this unprotected object.

It will thus be appreciated that the present invention can provide a mechanism for ensuring the confidentiality of 3D models, and that the mechanism can visually differentiate protected and non-protected models for non-authorized users. It will also be appreciated that the protected 3D object (and the scene comprising the 3D object) can always be rendered, although it will not be recognizable.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method of protecting a graphical object (120; 410), the method comprising the steps, in a device (110), of:
receiving (210) the graphical object (120; 410);
permuting (220) the position of at least some of the points defining the graphical object (120; 410) according to a determined permutation order, to obtain a protected graphical object (130; 420); and
outputting (230) the protected graphical object (130; 420).

2. The method of claim 1, wherein the graphical object (120; 410) is a three-dimensional object.

3. The method of claim 1, wherein the position of all the points are permuted.

4. The method of any one of claims 1 to 3, wherein the positions of the points are permuted using a key-based permutation algorithm.

5. A method of unprotecting a protected graphical object (130; 420), the method comprising the steps, in a device (140), of:
receiving (240) the protected graphical object (130; 420), the graphical object being protected by a first permutation of the position of at least some of the points defining the graphical object according to a first determined permutation order;
permuting (250) the position of the permuted points of the protected graphical object (130; 420) according to a second determined permutation order that reverses the first permutation, to obtain a unprotected graphical object (150; 410); and
outputting (260) the unprotected graphical object (150; 410).

6. The method of claim 5, wherein the graphical object (150; 410) is a three-dimensional object.

7. The method of claim 6, wherein the points correspond to the vertices of the surfaces composing the graphical object and are expressed in 3D coordinates.

8. The method of claim 6, wherein the points correspond to the mapping of textures on the surfaces composing the graphical object and are expressed in two-dimensional coordinates

9. The method of claim 5, wherein the position of all the points are permuted.

10. The method of any one of claims 5 to 9, wherein the position of the points are permuted using a key-based permutation algorithm.

11. The method of claim 5, wherein outputting comprises rendering.

12. A device (110) for protecting a graphical object (120; 410), the device (110) comprising:
means (114) for receiving the graphical object (120; 410);
means (111) for permuting the position of at least some of the points defining the graphical object (120; 410) according to a determined permutation order, to obtain a protected graphical object (130; 420); and
means (114) for outputting the protected graphical object (130; 420).

13. A device (140) for unprotecting a protected graphical object (130; 420), the device (140) comprising:
means (144) for receiving the protected graphical object (130; 420), the graphical object being protected by a first permutation of the position of at least some of the points defining the graphical object according to a first determined permutation order;
means (141) for permuting the position of the permuted points of the protected graphical object (130; 420) according to a second determined permutation order that reverses the first permutation, to obtain an unprotected graphical object (150; 410); and
means (144) for outputting the unprotected graphical object (150; 410).

14. A computable readable storage medium (160) comprising stored instructions that when executed by a processor performs the method of any one of claims 1 to 4.

15. A computable readable storage medium (170) comprising stored instructions that when executed by a processor performs the method of any one of claims 5 to 11.
